# EUROPÄISCHE PATENTSCHRIFT

(11) **EP 1 717 103 B1**
(45) Veröffentlichungstag und Bekanntmachung des Hinweises auf die Patenterteilung: **28.03.2012**
(21) Anmeldenummer: 06008147.8
(22) Anmeldetag: 20.04.2006
(51) Int. Cl.: B60R 1/07

(54) **Rückspiegel für ein Kraftfahrzeug**
Rearview mirror for a motor vehicle
Rétroviseur pour véhicule automobile

(30) Priorität: 27.04.2005 DE 102005020013
(43) Veröffentlichungstag der Anmeldung: 02.11.2006
(73) Patentinhaber: Magna Mirrors Holding GmbH, 63877 Sailauf (DE)
(72) Erfinder: Weimer, Helmut, 97896 Kirschfurt (DE); Berberich, Wolfgang, 97896 Freudenberg (DE); Fuchs, Hans-Joachim, 97904 Dorfprozelten (DE)
(74) Vertreter: von den Steinen, Axel

(56) Entgegenhaltungen:
- DE-U1- 29 915 896
- US-A1- 2002 041 454
- US-B1- 6 247 823

## Beschreibung

Die Erfindung betrifft einen Rückspiegel für ein Kraftfahrzeug nach dem Oberbegriff des Anspruchs 1.

Gattungsgemäße Rückspiegel werden in Kraftfahrzeugen als Innenrückspiegel oder als Außenrückspiegel eingesetzt, um dem Fahrer im Spiegelglas der Glasbaugruppe die Beobachtung des nachfolgenden Verkehrs zu ermöglichen. Bei modernen Rückspiegeln, insbesondere bei modernen Außenrückspiegeln, sind eine Vielzahl von elektrischen Funktionselementen in die Rückspiegel integriert. Dabei kann es sich um Beleuchtungseinrichtungen, Antennen, Spiegelheizungen, elektrochromatisch abblendbare Spiegelgläser oder sonstige Zusatzfunktionselemente handeln. Insbesondere ist vielfach auch eine motorische Verstellung der Glasbaugruppe mittels eines Glasverstellantriebs vorgesehen, dessen Antriebsmotoren elektrisch an das Bordnetz angeschlossen werden müssen.

Um die Montage des Rückspiegels bzw. der verschiedenen Bauteile des Rückspiegels zu ermöglichen, sind die Leitungen zu den verschiedenen Funktionselementen des Rückspiegels an geeigneten Stellen auftrennbar, wobei an den Leitungsenden jeweils Kontaktelemente vorgesehen sind.

Bei der Montage des Rückspiegels werden diese Kontaktstellen dann miteinander kontaktiert, um die elektrische Funktionsfähigkeit der elektrischen Funktionselemente zu gewährleisten.

Die US 6,247,823 B1 beschreibt einen Rückspiegel mit einer Steckkontaktierung. Die Stecker der Steckkontaktierung sind dabei derart ausgerichtet, dass durch die Fügebewegung ein Einstecken der Stecker in entsprechend angeordnete Steckbuchsen realisiert wird.

Die EP 1 370 443 B1 beschreibt eine Schiebekontaktierung zum automatischen Anschluss einer Spiegelheizung bei der Montage des Spiegelglases auf einer Trägerplatte.

Nachteilig an den bekannten Rückspiegeln ist es, dass die Montage der Rückspiegel durch das Kontaktieren der Kontaktstellen erheblich erschwert wird. Üblicherweise sind an den verschiedenen Funktionselementen Kabelschwänze mit Steckverbindern vorgesehen, die bei der Montage des Rückspiegels von Hand montiert werden müssen. Durch diese separate Montage der Kontaktelemente wird der Montageaufwand erheblich erhöht. Eine rationelle und weitgehend vollautomatisierte Montage der Rückspiegel ist damit weitgehend ausgeschlossen.

Nachteilig an den bekannten, mit der Fügebewegung kontaktierbaren Steckkontaktierung ist es, dass bei kleinsten Ungenauigkeiten auch nur eines Steckers die Montage unmöglich gemacht wird. Diese Gefahr ist dabei besonders groß, wenn gleichzeitig eine Vielzahl von Steckern eingesteckt werden müssen.

Ausgehend von diesem Stand der Technik ist es deshalb Aufgabe der vorliegenden Erfindung, einen neuen Rückspiegel vorzuschlagen, der kostengünstig montiert werden kann.

Diese Aufgabe wird durch einen Rückspiegel nach der Lehre des Anspruchs 1 gelöst.

Vorteilhafte Ausführungsformen der Erfindung sind Gegenstand der Unteransprüche.

Der Rückspiegel beruht auf dem Grundgedanken, dass die Kontaktelemente an den Leitungsenden, an denen die elektrische Leitung auftrennbar ist, jeweils an einem Bauelement festgelegt sind, wobei diese Bauelemente bei der Montage des Rückspiegels miteinander gefügt werden. Die beiden Kontaktelemente sind dabei erfindungsgemäß derart an den Bauelementen angeordnet und dimensioniert, dass die einander zugeordneten Kontaktstellen der beiden Kontaktelemente durch die Fügebewegung der Bauelemente bei der Montage des Rückspiegels miteinander kontaktiert werden. Dies bedeutet mit anderen Worten, dass allein durch das mechanische Fügen der entsprechenden Bauelemente während der Spiegelmontage zugleich und ohne zusätzlichen Montageaufwand die elektrische Kontaktierung ohne weiteres hergestellt wird. Auf diese Weise kann die separate Montage der Kontaktelemente zur Herstellung der elektrischen Funktionalität eingespart werden.

Erfindungsgemäß ist vorgesehen, dass die Kontaktstelle zumindest eines ersten Kontaktelements in der Art einer Flachleiterbahn ausgebildet ist. Diese Flachleiterbahn ist dabei auf einem geeigneten Trägerelement angeordnet, beispielsweise auf einer Leiterplatte oder einer Trägerfolie. An der Oberseite der Flachleiterbahn, insbesondere am Ende der Flachleiterbahn, ist ein nicht isolierter Bereich vorhanden, der als Kontaktstelle eines zugeordneten zweiten Kontaktelements dient. Auf diese Kontaktstelle der Flachleiterbahn wird das zugeordnete zweite Kontaktelement von oben aufgelegt und dadurch in der Kontaktfläche der elektrisch leitende Kontakt geschaffen.

Welche Bauteile des Rückspiegels mit erfindungsgemäßen Kontaktelementen ausgestattet sind, ist grundsätzlich beliebig. Nach einer ersten Ausführungsform der Erfindung ist ein erstes Kontaktelement am Rückspiegel selbst festgelegt. Insbesondere das Gehäuse des Rückspiegels oder die im Rückspiegel vorgesehene Verstärkerplatte eignen sich dazu.

Das zugeordnete zweite Kontaktelement ist gegenüberliegend an einem zur Befestigung des Rückspiegels an der Fahrzeugkarosserie vorgesehenen Spiegelfuß angeordnet. Auf diese Weise ist es dann möglich, dass allein durch die Befestigung des Rückspiegels am Spiegelfuß die Kontaktierung der im Rückspiegel vorgesehenen elektrischen Funktionselemente mit dem Bordnetz des Fahrzeuges gewährleistet wird.

Nach einer zweiten alternativen Ausführungsform ist das erste Kontaktelement wiederum am Rückspiegel selbst, insbesondere am Gehäuse oder an der Verstärkerplatte des Rückspiegels, festgelegt. Das zugeordnete zweite Kontaktelement ist bei dieser alternativen Ausführungsform am Glasverstellantrieb angeordnet, so dass durch die Montage des Glasverstellantriebs im Rückspiegel, insbesondere durch Befestigung am Gehäuse des Rückspiegels bzw. an der Verstärkerplatte des Rückspiegels, ohne weiteres die im Glasverstellantrieb befindlichen Antriebsmotoren elektrisch kontaktiert werden.

Nach einer weiteren alternativen Ausführungsform ist ein erstes Kontaktelement an der Rückseite der Glasbaugruppe festgelegt und wird mit einem zugeordneten zweiten Kontaktelement, das am Glasverstellantrieb angeordnet ist, kontaktiert.

Auf diese Weise können die in der Glasbaugruppe integrierten elektrischen Funktionselemente, vorzugsweise eine Spiegelheizung und/oder ein elektrochromatisch abblendbares Spiegelglas, mit den elektrischen Versorgungsleitungen, die durch den Glasverstellantrieb durchgeschleift sind, kontaktiert werden.

Soweit der Glasverstellantrieb dazu genutzt wird, die Glasbaugruppe mittelbar mit dem Bordnetz zu verbinden, sollte das dazu vorgesehene zweite Kontaktelement lösbar am Glasverstellantrieb befestigt sein. Auf diese Weise kann dann wahlweise in Abhängigkeit von den Sonderausstattungsmerkmalen der Glasbaugruppe das zweite Kontaktelement montiert oder weggelassen werden. Bei Ausstattungsvarianten, die keine elektrischen Funktionselemente im Bereich der Glasbaugruppe aufweisen, kann dadurch ein baugleicher Glasverstellantrieb verbaut werden, wobei das zweite Kontaktelement dann nicht am Glasverstellantrieb montiert wird. Nur bei Ausführungsvarianten mit elektrischen Funktionselementen im Bereich der Glasbaugruppe wird das zweite Kontaktelement am Glasverstellantrieb montiert, um die elektrische Kontaktierung der Glasbaugruppe zu gewährleisten.

Bei bekannten Bauformen von Glasbaugruppen ist vielfach eine Trägerplatte vorgesehen, die an der Rückseite der Glasbaugruppe angeordnet ist und form- und/oder kraftschlüssig am Glasverstellantrieb festgelegt, insbesondere aufgesteckt werden kann. Diese Trägerplatten werden üblicherweise aus Kunststoff gefertigt, der eine elektrische Isolation darstellt. Um auf einfache Weise die elektrischen Funktionselemente der Glasbaugruppe trotz der elektrisch isolierenden Trägerplatte kontaktieren zu können, sollte die Trägerplatte vorzugsweise eine Ausnehmung aufweisen. Durch diese Ausnehmung hindurch können dann die an der Glasbaugruppe vorgesehenen Kontaktstellen kontaktiert werden.

Diese Art der Bildung der notwendigen Kontaktstellen durch Flachleiterbahnen ist insbesondere dazu geeignet, die an Außenrückspiegeln vielfach vorgesehenen Heizleiterfolien elektrisch zu kontaktieren. Denn diese Heizleiterfolien weisen ohnehin eine Trägerfolie mit darauf angeordneten Flachleiterbahnen auf, die als Heizleiter dienen. Die Enden dieser Heizleiter können dann ohne weiteres als Kontaktstellen genutzt werden, wobei lediglich dafür zu sorgen ist, dass die Heizleiter in den entsprechenden Bereichen keine Isolation aufweisen.

Soweit die Heizleiterfolien durch die nicht isolierten Heizleiterbahnen kontaktiert werden, können völlig neuartige Fertigungstechniken zur Herstellung der Glasbaugruppe eingesetzt werden. Dies insbesondere deshalb, da die sonst üblichen Kabelschwänze an der Heizleiterfolie zur Kontaktierung der Spiegelheizung bzw. zur Kontaktierung der sonstigen an der Glasbaugruppe vorgesehenen elektrischen Funktionselemente entfallen. Dies ermöglicht es, dass die Heizleiterfolie als vorgefertigtes Halbfertigprodukt auf eine Rolle aufgespult ist und mittels einer Klebeschicht sehr rationell am Spiegelglas bzw. an der Trägerplatte befestigt werden kann.

Dies bedeutet mit anderen Worten, dass bei der Montage der Glasbaugruppe die Heizleiterfolie auf einer Rolle angeliefert wird. Zur Befestigung an der Trägerplatte wird die Schutzfolie über der Klebefläche der Heizleiterfolie abgezogen. Die Heizleiterfolie ist mit Positioniermarken vorgestanzt und ermöglicht es auf diese Weise, sehr einfach die Heizleiterfolie lagerichtig über der Trägerplatte zu positionieren. Die zunächst noch in einem Stanzgitter gehaltene Heizleiterfolie wird gegen die Trägerplatte gepresst und auf diese Weise aus dem Stanzgitter herausgetrennt. Anschließend kann auf der gegenüberliegenden Seite der Heizleiterfolie das Spiegelglas in gleicher Weise angeklebt werden. Der gesamte Montagevorgang der Glasbaugruppe kann auf diese Weise weitgehend vollautomatisch durchgeführt werden.

Soweit an der Glasbaugruppe neben einer Spiegelheizung auch ein elektrochromatisches Spiegelglas vorgesehen ist, sollte das Kontaktelement zur Kontaktierung des elektrochromatischen Spiegelglases ebenfalls in die Heizleiterfolie integriert sein, so dass durch geeignete Kontaktierung dieser die Kontaktstellen bildenden Flachleiterbahnen zugleich der Bordnetzkontakt zur Spiegelheizung als auch zum elektrochromatischen Spiegelglas hergestellt werden kann. Um dies zu ermöglichen, ist dabei zwischen dem elektrochromatischen Spiegelglas und der Heizleiterfolie eine weitere vorgefertigte Kontaktstelle vorzusehen, um das zur Kontaktierung des Spiegelglases an der Heizleiterfolie vorgesehene Leiterbahnelement am gegenüberliegenden Ende mit dem elektrochromatischen Spiegelglas zu verbinden.

Die elektrische Kontaktierung zwischen elektrochromatischem Spiegelglas und Heizleiterfolie kann dabei wahlweise in der Art einer Lötverbindung, einer elektrisch leitenden Klebverbindung oder in der Art einer elektrisch leitenden Pressverbindung ausgebildet sein.

Um die als Kontaktstelle dienende Flachleiterbahn zuverlässig elektrisch kontaktieren zu können, muss das gegenüberliegende zweite Kontaktelement eine entsprechende Konstruktion aufweisen. Dabei haben sich insbesondere federnd gelagerte Kontaktzungen zur elektrischen Kontaktierung an Flachleiterbahnen als geeignet erwiesen. Bei der Montage der beiden Bauelemente gelangen die Kontaktzungen von oben auf die Flachleiterbahn und werden aufgrund ihrer federnden Lagerung elastisch gegen die Flachleiterbahn gedrückt. Durch die elastische Vorspannung der Kontaktzungen nach der Montage ist ein elektrischer Kontakt auch bei starken Vibrationen und bei längerem Gebrauch zuverlässig gewährleistet.

Bei der Verwendung von Flachleiterbahnen als Kontaktstellen stellt sich insbesondere bei Außenrückspiegeln das Problem des Feuchtigkeitsschutzes, um Korrosion an den Kontaktstellen zu verhindern. Bevorzugt sollte deshalb am zweiten Kontaktelement, beispielsweise einem die Kontaktzungen tragenden Adapter, ein Dichtelement zum Schutz der kontaktierten Kontaktstellen vor Feuchtigkeit vorgesehen sein. Durch Aufsetzen des zweiten Kontaktelements auf den das erste Kontaktelement bildenden Flachleiterbahnen wird dann ein geeigneter Feuchtigkeitsschutz realisiert.

Das Dichtelement sollte dabei bevorzugt in der Art eines geschlossenen Dichtrings ausgebildet sein, das auf diese Weise mehrere kontaktierte Kontaktstellen abdichtend umgreifen kann.

Konstruktiv sollte der Dichtring bevorzugt in der Art einer Zellkautschukdichtung oder in der Art einer Dichtlippe ausgebildet sein.

Zur Verbesserung des Feuchtigkeitsschutzes kann zusätzlich zur Verwendung eines Dichtrings im Zwischenraum zwischen Dichtring und den Kontaktstellen ein Dichtgel angeordnet werden. Durch das Dichtgel wird Feuchtigkeit, die die Sperre des Dichtrings überwunden hat, von den Kontaktstellen abgehalten.

Verschiedene Ausführungsformen der Erfindung sind in den Zeichnungen schematisch dargestellt und werden nachfolgend beispielhaft erläutert:

Es zeigen:
- **Fig. 1**: die Verstärkerplatte eines gattungsgemäßen Außenrückspie- gels mit einem daran zu befestigenden Glasverstellantrieb in perspektivischer Ansicht;
- **Fig. 2**: einen Glasverstellantrieb mit daran befestigtem Kontaktele- ment in perspektivischer Ansicht;
- **Fig. 3**: die am Glasverstellantrieb gemäß **Fig. 2** zu befestigende Glasbaugruppe in perspektivischer Ansicht;
- **Fig. 4**: die Heizleiterfolie der Glasbaugruppe gemäß **Fig. 3** in An- sicht von oben;
- **Fig. 5**: die Kontaktelemente zur Kontaktierung der Heizleiterfolie gemäß **Fig. 4** in vergrößerter Ansicht von oben;
- **Fig. 6**: das Kontaktelement zur Befestigung am Glasverstellantrieb gemäß **Fig. 2** in vergrößerter perspektivischer Ansicht;
- **Fig. 7**: eine zweite Ausführungsform eines Kontaktelements zur Befestigung am Glasverstellantrieb gemäß **Fig. 2** in perspek- tivischer Ansicht.

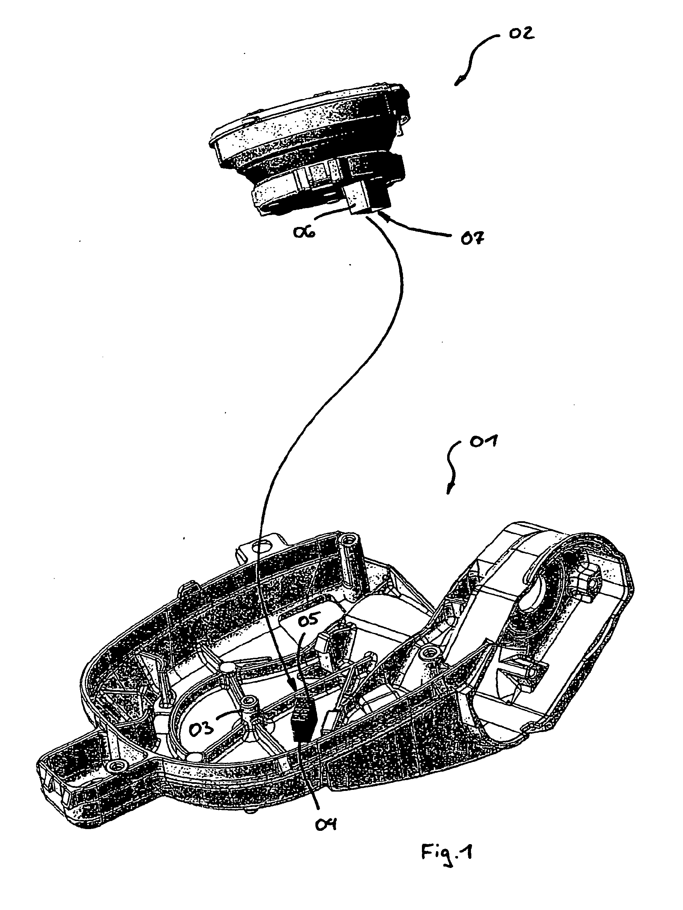

In **Fig. 1** ist eine Verstärkerplatte 01 und ein Glasverstellantrieb 02 eines Außenrückspiegels eines Fahrzeuges perspektivisch dargestellt. Die anderen Teile des Außenrückspiegels, die zum Verständnis der Erfindung nicht erforderlich sind, sind in **Fig. 1** nicht dargestellt. Bei der Montage des Außenrückspiegels wird der Glasverstellantrieb 03 von oben in die Verstärkerplatte 01 eingesetzt und durch Einschrauben einer Befestigungsschraube in den Schraubensockel 03 fixiert. In den Kunststoffkörper der Verstärkerplatte 01 sind elektrische Leitungen eingebettet. Das eine Ende dieser elektrischen Leitungen wird bei der Montage der Verstärkerplatte an einem Spiegelfuß mit dem Bordnetz des Fahrzeuges kontaktiert. Das jeweils gegenüberliegende Ende der elektrischen Leitungen mündet in ein auf der Innenseite der Verstärkerplatte 01 angeordnetes Kontaktelement 04, das insgesamt acht Steckkontakte 05 aufweist.

Am Glasverstellantrieb 02 seinerseits ist ein weiteres Kontaktelement 06 vorhanden, an dem verdeckt dargestellt insgesamt acht Steckkontakte 07 vorgesehen sind. Die in **Fig. 1** nicht erkennbaren Steckkontakte 07 am Kontaktelement 06 sind dabei zur elektrischen Kontaktierung der im Glasverstellantrieb 02 vorgesehenen elektrischen Funktionselemente, insbesondere der Antriebsmotoren, vorgesehen.

Bei der Montage des gattungsgemäßen Glasverstellantriebs 02 auf der Innenseite der Verstärkerplatte 01 wird der Glasverstellantrieb 02 von oben in die Verstärkerplatte 01 eingefügt. Die Kontaktelemente 04 und 06 sind dabei parallel zu der dafür erforderlichen Fügebewegung ausgerichtet, so dass die Steckkontakte 07 am Glasverstellantrieb 02 während der Fügebewegung in die Steckkontakte 05 an der Verstärkerplatte 01 eingesteckt werden. Die separate Kontaktierung des Glasverstellantriebs 02 kann auf diese Weise entfallen.

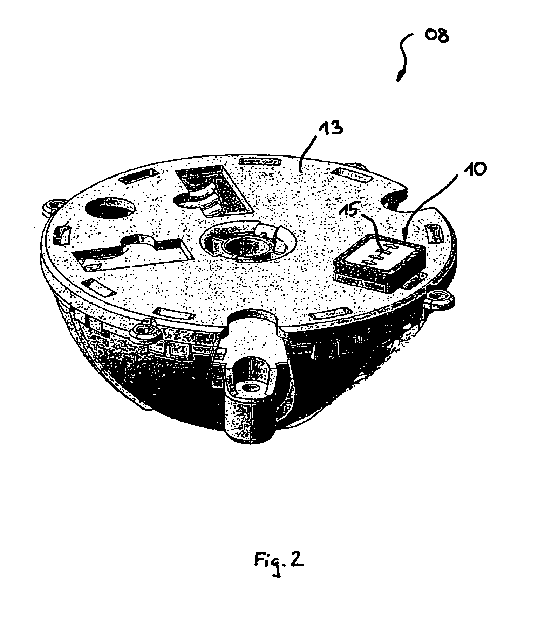

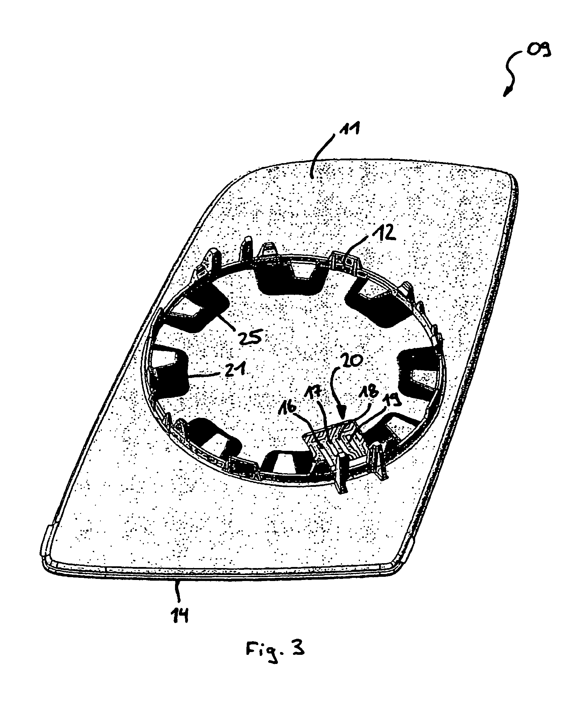

**Fig. 2** zeigt einen anderen, erfindungsgemäßen Glasverstellantrieb 08, der zur elektromechanischen Verstellung der in **Fig. 3** dargestellten Glasbaugruppe 09 vorgesehen ist. An der zur Glasbaugruppe 09 weisenden Seite des Glasverstellantriebs 08 ist ein Kontaktelement 10 befestigt, das der elektrischen Kontaktierung der an der Glasbaugruppe 09 vorgesehenen elektrischen Funktionselemente dient.

Die Glasbaugruppe 09 weist auf ihrer in **Fig. 3** dargestellten Rückseite eine Trägerplatte 11 auf, die der mechanischen Befestigung der Glasbaugruppe 09 am Glasverstellantrieb 08 dient. An die Trägerplatte 11 ist dazu ein kreisrunder Adapterring 12 angeformt, der bei der Montage des Rückspiegels auf die kreisrunde Halteplatte 13 des Glasverstellantriebs 08 aufgesteckt wird. Auf der der Trägerplatte 11 der Glasbaugruppe 09 gegenüberliegenden und in **Fig. 3** nicht dargestellten Seite ist das zur Beobachtung des nachfolgenden Verkehrs erforderliche Spiegelglas 14 befestigt, von dem in **Fig. 3** lediglich der äußere Rand zu erkennen ist. Das Spiegelglas 14 weist als Sonderausstattungsmerkmal eine elektrochromatische Spiegelglasabblendung auf. Außerdem ist zwischen dem Spiegelglas 14 und der Trägerplatte 11 eine Spiegelheizung in der Form einer Heizleiterfolie 21 vorgesehen.

Zur Kontaktierung der in der Glasbaugruppe 09 vorgesehenen elektrischen Funktionselemente, nämlich der Spiegelheizung und der elektrochromatischen Spiegelglasabblendung mit dem Bordnetz, weist das Kontaktelement 10 vier federnd gelagerte Kontaktzungen 15 auf, die als Kontaktstellen dienen. Bei der Montage der Glasbaugruppe 09 am Glasverstellantrieb 08 durch Aufstecken des Adapterrings 12 an der Halteplatte 13 gelangen die Kontaktzungen 15 elektrisch leitend auf Flachleiterbahnenden 16, 17, 18 und 19 zur Anlage, die gemeinsam ein Kontaktelement 32 zur elektrischen Kontaktierung der Glasbaugruppe 09 bilden. Um dies zu ermöglichen, weist die Trägerplatte 11 im Bereich der Flachleiterbahnenden 16, 17, 18 und 19 eine Ausnehmung 20 auf, die von der Außenkontur des Kontaktelements 10 durchgriffen werden kann.

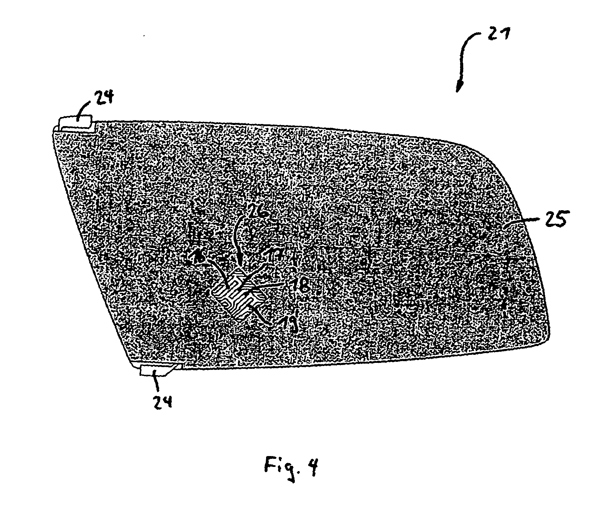

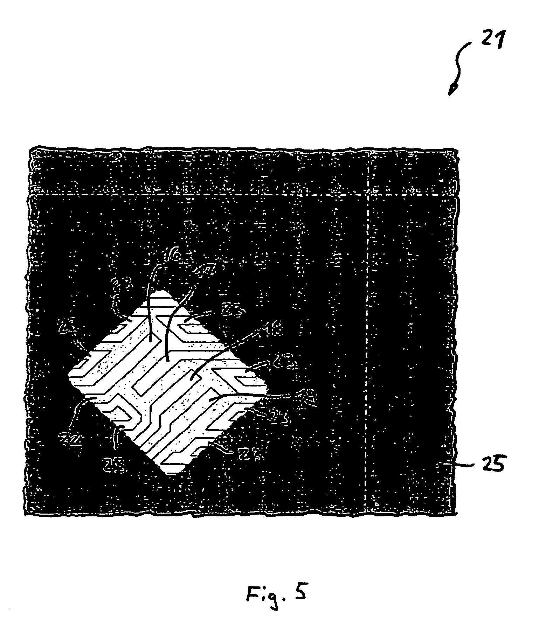

Die Flachleiterbahnenden 16, 17, 18 und 19 sind Teil des Leiterbahnlayouts auf einer Heizleiterfolie 21, die in **Fig. 4** und **Fig. 5** näher dargestellt ist. Auf einer Trägerfolie 22 (siehe **Fig. 5**) sind diverse Flachleiterbahnen angeordnet und bilden Heizmäander 23, die als Spiegelheizung dienen. Die Heizmäander 23 enden dabei in den Flachleiterbahnenden 16 und 17, so dass die Spiegelheizung durch Kontaktierung der Kontaktstellen in den Flachleiterbahnenden 16 und 17 mit dem Bordnetz verbunden werden kann. Zwei weitere Flachleiterbahnen, die in den Flachleiterbahnenden 18 und 19 münden, dienen dem elektrischen Anschluss des elektrochromatischen Spiegelglases 14. Diese beiden zusätzlichen Flachleiterbahnen münden in zwei Kontaktstellen 24, die ihrerseits bei der Montage der Glasbaugruppe 09 mit am Spiegelglas 14 vorgesehenen Kontaktstellen durch einen Lötkontakt elektrisch verbunden werden. Die Flachleiterbahnstruktur auf der Trägerfolie 22 wird auf der zur Trägerplatte 11 weisenden Seite mit einer Isolationsfolie 25 abgedeckt, wobei die Isolationsfolie 25 im Bereich der Flachleiterbahnenden 16, 17, 18 und 19 wiederum einen Ausschnitt 26 aufweist, der vom Kontaktelement 10 durchgriffen werden kann.

Bei der Befestigung der Glasbaugruppe 09 am Glasverstellantrieb 08 wird der Adapterring 12 einfach auf die Halteplatte 13 aufgesteckt, wobei die elektrische Kontaktierung der an der Glasbaugruppe 09 vorgesehenen Funktionselemente in einfacher Weise dadurch realisiert wird, dass die elastisch gelagerten Kontaktzungen 15 des Kontaktelements 10 auf den Flachleiterbahnenden 16, 17, 18 und 19 zur Anlage kommen. Das Kontaktelement 10 ist dabei lösbar am Glasverstellantrieb 08 befestigt, beispielsweise eingeclipst, so dass bei Ausführungsvarianten, die keine Spiegelheizung und kein elektrochromatisches Spiegelglas aufweisen, der gleiche Glasverstellantrieb 08 verwendet werden kann, wobei bei diesen Grundausführungsvarianten ohne Sonderausstattungsmerkmale das Kontaktelement 10 dann nicht am Glasverstellantrieb 08 montiert wird.

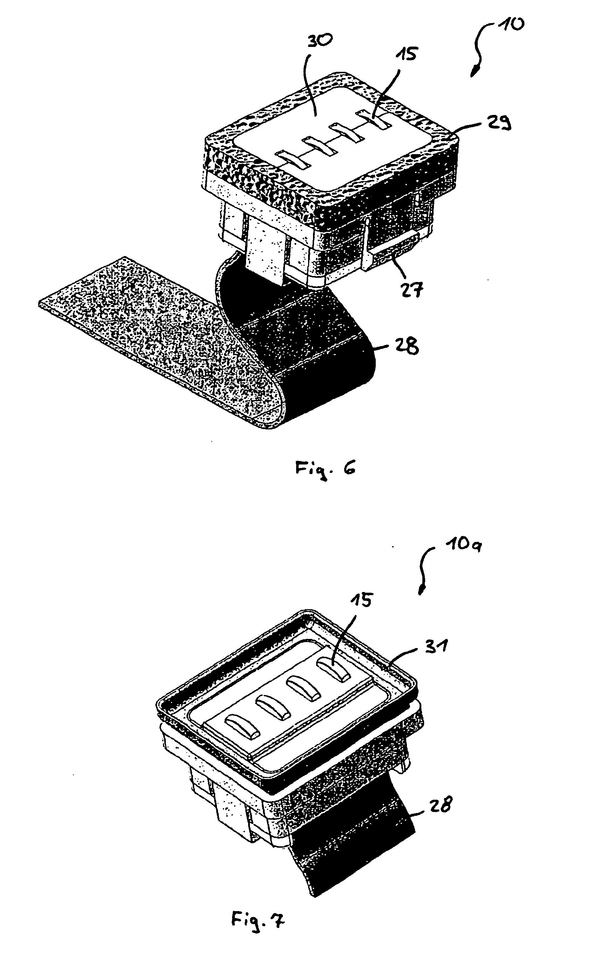

In **Fig. 6** ist das Kontaktelement 10 mit den Kontaktzungen 15 vergrößert dargestellt. Das Kontaktelement 10 kann mittels Clipshaken 27 von oben an der Halteplatte 13 des Glasverstellantriebs 08 eingeclipst werden. Mittels eines Flachleiters 28 sind die Kontaktzungen 15 an das Bordnetz des Fahrzeugs angeschlossen. Zum Schutz der Kontaktzungen 15 vor Feuchtigkeit ist am Außenumfang des Kontaktelements 10 ein aus Zellkautschuk hergestellter Dichtring 29 angeordnet. Dieser Dichtring gelangt bei der Montage der Glasbaugruppe 09 am Glasverstellantrieb 08 auf der Oberseite der Heizleiterfolie 21 im Bereich des Ausschnitts 26 zur Anlage und schützt die Kontaktstellen zwischen den Flachleiterbahnenden 16, 17, 18 und 19 mit den gegenüberliegenden Kontaktzungen 15 vor eindringender Feuchtigkeit. Als zusätzlicher Feuchtigkeitsschutz ist im Zwischenraum zwischen den Kontaktzungen 15 und dem Dichtring 29 ein Dichtgelkissen 30 vorgesehen.

In **Fig. 7** ist eine zweite Ausführungsform 10a eines Kontaktelements dargestellt, das sich von der ersten Ausführungsform 10 dadurch unterscheidet, dass der Feuchtigkeitsschutz durch eine ringförmige Dichtlippe 31 gewährleistet wird. Ein Dichtgelkissen 30 kann bei der Ausführungsform 10a wahlweise wegfallen.

## Patentansprüche

1. Rückspiegel für ein Kraftfahrzeug mit einer Glasbaugruppe zur Beobachtung des nachfolgenden Verkehrs und zumindest einem elektrischen Funktionselement, das über zumindest eine elektrische Leitung mit dem Bordnetz des Fahrzeuges oder anderen elektrischen Funktionselementen verbunden werden kann, wobei in der Leitung zumindest eine Trennstelle vorgesehen ist, in der die Leitung unter Bildung zweier Leitungsenden aufgetrennt werden kann, und wobei an den Leitungsenden jeweils Kontaktelemente vorgesehen sind, deren Kontaktstellen bei der Montage des Rückspiegels elektrisch leitend miteinander kontaktiert werden, wobei die Kontaktelemente (04, 06, 10, 32) jeweils an einem Bauelement (01, 02, 08, 09) festgelegt sind, wobei die Bauelemente (01, 02, 08, 09) bei der Montage des Rückspiegels miteinander gefügt werden, und wobei die beiden Kontaktelemente (04, 06, 10, 32) derart an den Bauelementen (01, 02, 08, 09) angeordnet sind, dass die einander zugeordneten Kontaktstellen (05, 07, 15, 16, 17, 18, 19) der beiden Kontaktelemente (04, 06, 10, 32) durch die Fügebewegung der Bauelemente (01, 02, 08, 09) bei der Montage des Rückspiegels miteinander kontaktiert werden
**dadurch gekennzeichnet,**
**dass** die Kontaktstelle (16, 17, 18, 19) zumindest eines ersten Kontaktelements (32) in der Art einer Flachleiterbahn ausgebildet ist, die mit ihrer Unterseite auf einem Trägerelement, insbesondere einer Trägerfolie 22), angeordnet ist, und die in zumindest einem Bereich ihrer Oberseite, insbesondere am Ende der Flachleiterbahn, mit der Kontaktstelle (15) eines zugeordneten zweiten Kontaktelements (10) elektrisch kontaktierbar ist.

2. Rückspiegel nach Anspruch 1,
**dadurch gekennzeichnet,**
**dass** ein erstes Kontaktelement am Rückspiegel, insbesondere am Gehäuse oder an der Verstärkerplatte des Rückspiegels, festgelegt ist, wobei ein zugeordnetes zweites Kontaktelement an einem zur Befestigung des Rückspiegels an der Fahrzeugkarosserie vorgesehenen Spiegelfuß festgelegt ist.

3. Rückspiegel nach Anspruch 1 oder 2,
**dadurch gekennzeichnet,**
**dass** ein erstes Kontaktelement (05) am Rückspiegel, insbesondere am Gehäuse oder an der Verstärkerplatte (01) des Rückspiegels, festgelegt ist, wobei ein zugeordnetes zweites Kontaktelement (06) an einem Glasverstellantrieb (02) festgelegt ist.

4. Rückspiegel nach einem der Ansprüche 1 bis 3,
**dadurch gekennzeichnet,**
**dass** ein erstes Kontaktelement (32) an der Rückseite der Glasbaugruppe (09) festgelegt ist, wobei ein zugeordnetes zweites Kontaktelement (10) am Glasverstellantrieb (08) festgelegt ist.

5. Rückspiegel nach Anspruch 4,
**dadurch gekennzeichnet,**
**dass** an der Glasbaugruppe (09) eine elektrisch betriebene Spiegelheizung (21) und/oder ein elektrochromatisches Spiegelglas (14) vorgesehen ist, wobei die Spiegelheizung (21) und/oder das elektrochromatische Spiegelglas (14) über die beiden einander zugeordneten Kontaktelemente (10, 15) mittelbar oder unmittelbar mit dem Bordnetz verbunden werden können.

6. Rückspiegel nach Anspruch 4 oder 5,
**dadurch gekennzeichnet,**
**dass** das zweite Kontaktelement (10) lösbar am Glasverstellantrieb (08) befestigt ist und nur wahlweise in Abhängigkeit von Sonderausstattungsmerkmalen der Glasbaugruppe (09) montiert wird.

7. Rückspiegel nach einem der Ansprüche 4 bis 6,
**dadurch gekennzeichnet,**
**dass** zur Befestigung der Glasbaugruppe (09) am Glasverstellantrieb (08) eine Trägerplatte (11) vorgesehen ist, die an der Rückseite der Glasbaugruppe (09) angeordnet ist und form- und/oder kraftschlüssig am Glasverstellantrieb (08) festgelegt, insbesondere aufgesteckt werden kann, wobei die Trägerplatte (11) eine Ausnehmung (20) aufweist, durch die die an der Glasbaugruppe (09) vorgesehenen Kontaktstellen (16, 17, 18, 19) kontaktierbar sind.

8. Rückspiegel nach Anspruch 7,
**dadurch gekennzeichnet,**
**dass** die Trägerfolie (22) Bestandteil einer als Spiegelheizung dienenden Heizleiterfolie (21) ist.

9. Rückspiegel nach Anspruch 8,
**dadurch gekennzeichnet,**
**dass** die Heizleiterfolie (21) mittels einer Klebeschicht am Spiegelglas (14) und/oder der Trägerplatte (11) festgelegt ist.

10. Rückspiegel nach Anspruch 8 oder 9,
**dadurch gekennzeichnet,**
**dass** die Kontaktstellen (18, 19) zur Kontaktierung des an der Glasbaugruppe (09) vorgesehenen elektrochromatischen Spiegelglases in das Kontaktelement (32) der Heizleiterfolie (21) integriert sind, wobei das elektrochromatische Spiegelglas (14) an zumindest einer weiteren Kontaktstelle (24) mit der Heizleiterfolie (21) elektrisch kontaktiert ist.

11. Rückspiegel nach Anspruch 10,
**dadurch gekennzeichnet,**
**dass** das elektrochromatische Spiegelglas (14) durch eine Lötverbindung (24), eine elektrisch leitende Klebeverbindung oder eine elektrisch leitende Pressverbindung mit der Heizleiterfolie (21) elektrisch kontaktiert ist.

12. Rückspiegel nach einem der Ansprüche 7 bis 11,
**dadurch gekennzeichnet,**
**dass** das zweite Kontaktelement (10) zur Kontaktierung der von einer Flachleiterbahn gebildeten Kontaktstelle (16, 17, 18, 19) zumindest eine federnd gelagerte Kontaktzunge (15) aufweist.

13. Rückspiegel nach einem der Ansprüche 7 bis 12,
**dadurch gekennzeichnet,**
**dass** am zweiten Kontaktelement (10) zur Kontaktierung der von einer Flachleiterbahn gebildeten Kontaktstelle (16, 17, 18, 19) ein Dichtelement (29, 31) zum Schutz der kontaktierten Kontaktstellen (16, 17, 18, 19) vor Feuchtigkeit vorgesehen ist.

14. Rückspiegel nach Anspruch 13,
**dadurch gekennzeichnet,**
**dass** das Dichtelement (29, 31) mehrere kontaktierte Kontaktstellen (16, 17, 18, 19) abdichtend mit einem geschlossenen Dichtring umgreift.

15. Rückspiegel nach Anspruch 14,
**dadurch gekennzeichnet,**
**dass** der Dichtring in der Art einer Zellkautschukdichtung (29) oder in der Art einer Dichtlippe (31) ausgebildet ist.

16. Rückspiegel nach Anspruch 14,
**dadurch gekennzeichnet,**
**dass** der Zwischenraum zwischen dem Dichtring (29) und den kontaktierten Kontaktstellen (16, 17, 18, 19) mit einem zusätzlichen Dichtgel (30) ausgefüllt ist.

17. Rückspiegel nach einem der Ansprüche 1 bis 16,
**dadurch gekennzeichnet,**
**dass** der Rückspiegel in der Art eines Außenspiegels ausgebildet ist.

## Claims

1. A rearview mirror for a motor vehicle having a glass module for observation of the traffic behind and at least one electric function element which can be connected by at least one electric line to the vehicle electric system or other electric function elements, wherein at least one dividing point is provided in the line so that the line can be divided at this point, forming two line ends, and wherein contact elements are provided on each of the line ends, their contact points being electrically contacted during assembly of the rearview mirror, wherein the contact elements (04, 06, 10, 32) are each attached to a component (01, 02, 08, 09), wherein the components (01, 02, 08, 09) are joined together during assembly of the rearview mirror, and wherein the two contact elements (04, 06, 10, 32) are arranged on the components (01, 02, 08, 09) in such a way that the contact points (05, 07, 15, 16, 17, 18, 19) of the two contact elements (04, 06, 10, 32) assigned to one another are contacted by the joining movement of the components (01, 02, 08, 09) in assembly of the rearview mirror,
**characterized in that**
the contact point (16, 17, 18, 19) of at least a first contact element (32) is formed in the manner of a flat conductor which is arranged with its underside on a carrier element, in particular a carrier film (22) and which can be electrically contacted in at least one area of its top side, in particular at the end of the flat conductor, with the contact point (15) of a respective second contact element (10).

2. The rearview mirror according to Claim 1,
**characterized in that**
a first contact element is attached to the rearview mirror, in particular to the housing or to the amplifier plate of the rearview mirror, wherein a respective second contact element is attached to a mirror base provided for mounting the rearview mirror on the vehicle body.

3. The rearview mirror according to Claim 1 or 2,
**characterized in that**
a first contact element (05) is attached to the rearview mirror, in particular to the housing or to the amplifier plate (01) of the rearview mirror, wherein a respective second contact element (06) is attached to a glass adjustment drive (02).

4. The rearview mirror according to any one of Claims 1 through 3,
**characterized in that**
a first contact element (32) is attached to the rear side of the glass module (09), wherein a respective second contact element (10) is attached to the glass adjustment drive (08).

5. The rearview mirror according to Claim 4,
**characterized in that**
an electrically operated mirror heating (21) and/or an electrochromatic mirror glass (14) is provided on the glass module (09), wherein the mirror heating (21) and/or the electrochromatic mirror glass (14) can be connected directly or indirectly to the vehicle electric system via the two paired contact elements (10, 15).

6. The rearview mirror according to Claim 4 or 5,
**characterized in that**
the second contact element (10) is detachably attached to the glass adjustment drive (08) and is mounted only optionally as a function of special equipment features of the glass module (09).

7. The rearview mirror according to any one of Claims 4 through 6,
**characterized in that**
for mounting the glass module (09) on the glass adjustment drive (08), a carrier plate (11) is provided, which is arranged on the rear side of the glass module (09) and can be attached to the glass adjustment drive (08) in a form-fitting and/or frictionally engaged manner and in particular can be plug-connected, wherein the carrier plate (11) has a recess (20) through which the contact points (16, 17, 18, 19) provided on the glass module (09) can be contacted.

8. The rearview mirror according to Claim 7,
**characterized in that**
the carrier film (22) is part of a heating conductor film (21) which serves as a mirror heating.

9. The rearview mirror according to Claim 8,
**characterized in that**
the heating conductor film (21) is attached to the mirror glass (14) and/or the carrier plate (11) by means of an adhesive layer.

10. The rearview mirror according to Claim 8 or 9,
**characterized in that**
the contact points (18, 19) for contacting the electrochromatic mirror glass provided on the glass module (09) are integrated into the contact element (32) of the heating conductor film (21), wherein the electrochromatic mirror glass (14) is electrically contacted to the heating conductor film (21) at at least one additional contact point (24).

11. The rearview mirror according to Claim 10,
**characterized in that**
the electrochromatic mirror glass (14) is electrically contacted to the heating conductor film (21) by a soldered joint (24), an electrically conducting adhesive bond or an electrically conducting press connection.

12. The rearview mirror according to any one of Claims 7 through 11,
**characterized in that**
the second contact element (10) for contacting the contact point (16, 17, 18, 19) formed by a flat conductor has at least one spring-mounted contact tongue (15).

13. The rearview mirror according to any one of Claims 7 through 12,
**characterized in that**
a sealing element (29, 31) for protecting the contacted contact points (16, 17, 18, 19) from moisture is provided on the second contact element (10) for contacting the contact point (16, 17, 18, 19) formed by a flat conductor.

14. The rearview mirror according to Claim 13,
**characterized in that**
the sealing element (29, 31) surrounds multiple contact points (16, 17, 18, 19) that have been contacted, with a closed sealing ring forming a seal.

15. The rearview mirror according to Claim 14,
**characterized in that**
the sealing ring is designed in the manner of a cellular rubber gasket (29) or in the manner of a sealing lip (31).

16. The rearview mirror according to Claim 14,
**characterized in that**
the intermediate space between the sealing ring (29) and the contacted contact points (16, 17, 18, 19) is filled with an additional sealing gel (30).

17. The rearview mirror according to any one of Claims 1 through 16,
**characterized in that**
the rearview mirror is designed in the manner of an exterior mirror.

## Revendications

1. Rétroviseur pour un véhicule automobile, comprenant un ensemble de glace pour l'observation du trafic en arrière et comprenant au moins un élément fonctionnel électrique qui peut être raccordé via au moins une ligne électrique au réseau de bord du véhicule ou à d'autres éléments fonctionnels électriques, au moins un point de séparation étant prévu dans la ligne, dans lequel la ligne peut être séparée en formant deux extrémités de ligne, des éléments de contact étant respectivement prévus auxdites extrémités de ligne, les points de contact des extrémités de ligne étant mis en contact entre eux de manière électriquement conductrice lors du montage du rétroviseur, les éléments de contact (04, 06, 10, 32) étant chacun fixés à un composant (01, 02, 08, 09), les composants (01, 02, 08, 09) étant assemblés les uns avec les autres lors du montage du rétroviseur, les deux éléments de contact (04, 06, 10, 32) étant agencés aux composants (01, 02, 08, 09) de telle manière que les points de contact (05, 07, 15, 16, 17, 18, 19) associés les uns aux autres des deux éléments de contact (04, 06, 10, 32) sont mis en contact entre eux par le mouvement d'assemblage des composants (01, 02, 08, 09) lors du montage du rétroviseur,
**caractérisé en ce que**
le point de contact (16, 17, 18, 19) d'au moins un premier élément de contact (32) est conçu en forme d'une piste conductrice méplate, qui avec son côté inférieur est agencée sur un élément de support, en particulier une feuille de support (22), et qui dans au moins une région de son côté supérieur, en particulier à l'extrémité de la piste conductrice méplate, peut être mise en contact électrique avec le point de contact (15) d'un second élément de contact (10) associé.

2. Rétroviseur selon la revendication 1,
**caractérisé en ce qu'**
un premier élément de contact est fixé au rétroviseur, en particulier au boîtier ou à la plaque amplificatrice (01) du rétroviseur, et un second élément de contact (06) associé est fixé à un pied du rétroviseur qui est prévu à la carrosserie du véhicule pour fixer le rétroviseur.

3. Rétroviseur selon la revendication 1 ou 2,
**caractérisé en ce qu'**
un premier élément de contact (05) est fixé au rétroviseur, en particulier au boîtier ou à la plaque amplificatrice (01) du rétroviseur, et un second élément de contact (06) associé est fixé à un entraînement d'ajustage de glace (02).

4. Rétroviseur selon l'une quelconque des revendications 1 à 3,
**caractérisé en ce qu'**
un premier élément de contact (32) est fixé au côté postérieur de l'ensemble de glace (09), et un second élément de contact associé (10) est fixé à l'entraînement d'ajustage de glace (08).

5. Rétroviseur selon la revendication 4,
**caractérisé en ce qu'**
un chauffage de rétroviseur (21) actionné électriquement et/ou une glace (14) électrochromatique est/sont prévu(e)/s à l'ensemble de glace (09), le chauffage de rétroviseur (21) et/ou la glace électrochromatique (14) peut/peuvent être relié(e)/s au réseau de bord de manière directe ou indirecte via les deux éléments de contact (10, 15) associés.

6. Rétroviseur selon la revendication 4 ou 5,
**caractérisé en ce que**
le second élément de contact (10) est fixé à l'entraînement d'ajustage de glace (08) de manière détachable, et est monté seulement optionnellement en fonction de caractéristiques d'équipement spéciales de l'ensemble de glace (09).

7. Rétroviseur selon l'une quelconque des revendications 4 à 6,
**caractérisé en ce que**
pour la fixation de l'ensemble de glace (09), une plaque de support (11) est prévue à l'entraînement d'ajustage de glace (08), la plaque de support étant agencée au côté postérieur de l'ensemble de glace (09) et pouvant être fixée, en particulier enfichée, à l'entraînement d'ajustage de glace (08) par engagement positif et/ou par adhérence, la plaque de support (11) présentant un évidement (20) via lequel les points de contact (16, 17, 18, 19) prévus à l'ensemble de glace (09) peuvent être mis en contact.

8. Rétroviseur selon la revendication 7,
**caractérisé en ce que**
la feuille de support (22) appartient à une feuille de conducteur chauffant (21) faisant office de chauffage de rétroviseur.

9. Rétroviseur selon la revendication 8,
**caractérisé en ce que**
la feuille de conducteur chauffant (21) est fixée à la glace (14) et/ou à la plaque de support (11) au moyen d'une couche adhésive.

10. Rétroviseur selon la revendication 8 ou 9,
**caractérisé en ce que**
les points de contact (18, 19) sont intégrés dans l'élément de contact (32) de la feuille de conducteur chauffant (21) pour la mise en contact de la glace électrochromatique prévue à l'ensemble de glace (09), la glace électrochromatique (14) étant mise en contact électrique avec la feuille de conducteur chauffant (21) à au moins un autre point de contact (24).

11. Rétroviseur selon la revendication 10,
**caractérisé en ce que**
la glace électrochromatique (14) est mise en contact électrique avec la feuille de conducteur chauffant (21) par une connexion par brasage (24), par une connexion adhésive étant électriquement conductrice ou bien par une connexion de pression étant électriquement conductrice.

12. Rétroviseur selon l'une quelconque des revendications 7 à 11,
**caractérisé en ce que**
le second élément de contact (10) présente un moins une languette de contact (15) montée de manière élastique pour la mise en contact du point de contact (16, 17, 18, 19) formé par une piste conductrice méplate.

13. Rétroviseur selon l'une quelconque des revendications 7 à 12,
**caractérisé en ce qu'**
un élément d'étanchéité (29, 31) pour protéger contre l'humidité les points de contact (16, 17, 18, 19) qui ont été mis en contact est prévu au second élément de contact (10) pour la mise en contact d'un point de contact (16, 17, 18, 19) formé par une piste conductrice méplate.

14. Rétroviseur selon la revendication 13,
**caractérisé en ce que**
l'élément d'étanchéité (29, 31) entoure plusieurs points de contact (16, 17, 18, 19) qui ont été mis en contact de manière étanche au moyen d'une bague d'étanchéité close.

15. Rétroviseur selon la revendication 14,
**caractérisé en ce que**
la bague d'étanchéité est conçue sous forme d'un joint en caoutchouc cellulaire (29) ou sous forme d'une lèvre d'étanchéité (31).

16. Rétroviseur selon la revendication 14,
**caractérisé en ce que**
l'espace entre la bague d'étanchéité (29) et les points de contact (16, 17, 18, 19) qui ont été mis en contact est rempli avec un gel d'étanchéité (30) supplémentaire.

17. Rétroviseur selon l'une quelconque des revendications 1 à 16,
**caractérisé en ce que**
le rétroviseur est conçu sous forme d'un rétroviseur extérieur.
